# EUROPEAN PATENT SPECIFICATION

(11) **EP 2 383 834 B1**
(45) Date of publication and mention of the grant of the patent: **22.08.2012**
(21) Application number: 11152163.9
(22) Date of filing: 26.01.2011
(51) Int. Cl.: H01M 10/50

(54) **Battery pack**
Batteriepack
Bloc-batterie

(30) Priority: 21.04.2010 US 282911 P; 30.12.2010 US 982254
(43) Date of publication of application: 02.11.2011
(73) Proprietor: SB LiMotive Co., Ltd., Giheung-gu Yongin-si, Gyeonggi-do 446-711 (KR)
(72) Inventor: Yoon, Jihyoung, 446-711, GYEONGGI-DO (KR)
(74) Representative: Gulde Hengelhaupt Ziebig & Schneider

(56) References cited:
- DE-A1-102008 034 885
- US-A- 4 578 324
- US-A1- 2005 170 240
- US-A1- 2008 311 468
- US-A1- 2009 023 056

## Description

### [TECHNICAL FIELD]

Embodiments relate to a battery pack.

### [BACKGROUND ART]

Unlike a primary battery that is not rechargeable, a secondary battery is a rechargeable and dischargeable battery. Such a secondary battery is used as a battery pack formed by electrically connecting a plurality of battery cells to each other, so that the secondary battery can be used in a device such as electric vehicles and uninterruptable power supplies, which have larger capacity requirements than portable electronic devices.

When being repeatedly charged and discharged, each battery cell of a battery pack is heated. If heat generated by the repeated charging and discharging is not cooled in the battery pack, each battery cell is degraded. Furthermore, heat generated from each battery cell degrades the whole performance of the battery pack. In addition, when a plurality of heated battery cells is unevenly cooled, the whole performance of a battery pack is degraded.

### [DETAILED DESCRIPTION OF THE INVENTION]

### [TECHNICAL PROBLEM]

An aspect of the present invention provides a battery pack that can uniformly cool a plurality of battery cells so as to significantly improve stability.

### [TECHNICAL SOLUTION]

According to an aspect of the present invention, a battery pack as defined in claim 1 is disclosed. The battery pack comprises a plurality of battery cells electrically connected to one another and arranged to extend from a first side to a second side of the battery pack; a first refrigerant circulation pipe arranged adjacent to the plurality of battery cells; a second refrigerant circulation pipe arranged adjacent to the first refrigerant circulation pipe; wherein the first refrigerant circulation pipe is adapted to guide a refrigerant from the first side to the second side of the battery pack and the second refrigerant circulation pipe is adapted to guide a refrigerant from the second side of the battery pack to the first side of the battery pack.

Preferably at least one of the first refrigerant circulation pipe and the second refrigerant circulation pipe directly contacts the plurality of battery cells. Preferably the first refrigerant circulation pipe directly contacts the second refrigerant circulation pipe.

Preferably an intermediate medium adapted to uniformly transfer heat is interposed between the plurality of battery cells and the first refrigerant circulation pipe. Preferably an intermediate medium adapted to uniformly transfer heat is interposed between the first refrigerant circulation pipe and the second refrigerant circulation pipe.

Preferably the battery pack further comprises: a first refrigerant supply pipe connected to a first end of the first refrigerant circulation pipe, the first end of the first refrigerant circulation pipe being located adjacent to the first side of the battery pack; a first refrigerant discharge pipe connected to a second end of the first refrigerant circulation pipe, the second end of the first refrigerant circulation pipe being located adjacent to the second side of the battery pack; a second refrigerant supply pipe connected to a first end of the second refrigerant circulation pipe, the first end of the second refrigerant circulation pipe being located adjacent to the second side of the battery pack; a second refrigerant discharge pipe connected to a second end of the second refrigerant circulation pipe, the second end of the second refrigerant circulation pipe being located adjacent to the first side of the battery pack; at least one pump adapted to supply a refrigerant to the first refrigerant supply pipe and to the second refrigerant supply pipe; and a heat dissipation storage unit connected to the first refrigerant supply pipe, the second refrigerant supply pipe, the first refrigerant discharge pipe and the second refrigerant discharge pipe and being adapted to cool a refrigerant from the first refrigerant discharge pipe and the second refrigerant discharge pipe.

Preferably the battery pack further comprises a control unit adapted to determine a temperature of each of the plurality of battery cells and to control the at least one pump depending on the determined temperatures of the plurality of battery cells. Preferably the control unit is adapted to activate the at least one pump when a highest temperature of the plurality of battery cells is greater than a first predetermined value. Preferably the control unit is adapted to deactivate the at least one pump when a highest temperature of the plurality of battery cells is smaller than a second predetermined value. Preferably the
first predetermined value is greater than the second predetermined value. Preferably each of the first refrigerant circulation pipe and/or the second refrigerant circulation pipe is formed of a material with a thermal conductivity of greater than 100 W/(m*K).

Preferably the first refrigerant circulation pipe is formed along a first circulation path between the first side and the second side of the battery pack and the second refrigerant circulation pipe is formed along a second circulation path between the first side and the second side of the battery pack, wherein the first circulation path is arranged concurrent with the second circulation path.

Preferably the first refrigerant circulation pipe and the second refrigerant circulation pipe are arranged side by side.

Preferably the second refrigerant circulation pipe is stacked on the first refrigerant circulation pipe.

Preferably the shape of the first refrigerant circulation pipe is the same as the shape of the second refrigerant circulation pipe.

Preferably a width of the first refrigerant circulation pipe and a width of the second refrigerant circulation pipe is the same as a width of the plurality of battery cells. Preferably the sum of a width of the first refrigerant circulation pipe and a width of the second refrigerant circulation pipe is the same as a width of the plurality of battery cells.

Preferably each of the first refrigerant circulation pipe and the second refrigerant circulation pipe comprises a longish, strip-like shape having a uniform width along its extension from the first side to the second side of the battery pack.

Preferably each of the first refrigerant circulation pipe and the second refrigerant circulation pipe comprises parallel portions corresponding to the number and location of the plurality of battery cells, each parallel portion contacting one of the plurality of battery cells and extending in a direction perpendicular to an axis extending from the first side to the second side of the battery pack, wherein the parallel portions of the first refrigerant circulation pipe interdigitate with the parallel portions of the second refrigerant circulation pipe, and wherein adjacent parallel portions are connected by connecting portions. Preferably the connecting portions are formed as vertical portions having a stripe-like shape, the longitudinal axes of the connecting portions being perpendicular to the parallel portions. Preferably the connecting portions are formed as curved portions. In other words, a zigzag configuration for the refrigerant circulation pipes is preferably used. The use of a zigzag configuration is advantageous in that the detrimental effects of a locally non uniform heat dissipation environment (adjacent to the refrigerant circulation pipes) can be efficiently compensation or suppressed compared to longish, strip-like circulation pipes.

Preferably the first refrigerant circulation pipe is formed of a material with a high thermal conductivity. Preferably, the second refrigerant circulation pipe is formed of a material with a high thermal conductivity. Preferably, the intermediate medium is formed of a material with a high thermal conductivity. In the sense of the present invention, a material with a high thermal conductivity preferably comprises a thermal conductivity of greater than 100 W/(m*K), more preferably greater than 200 W/(m*K), more preferably greater than 300 W/(m*K) and still more preferably greater than 400 W/(m*K).

Preferably the refrigerant is a liquid refrigerant (at a temperature of 20°C). Preferably the refrigerant comprises a material having a heat capacity which is at least 20% of the heat capacity of carbon dioxide, more preferably at least 50% of the heat capacity of carbon dioxide, more preferably at least 70% of the heat capacity of carbon dioxide, and still more preferably at least 90% of the heat capacity of carbon dioxide(at a temperature of 20°C).

The surface area of the refrigerant circulation pipes (i.e. first refrigerant circulation pipe and/or second refrigerant circulation pipe) which cover the lower side of the battery cells is at least 50% of the surface area of the lower side of the battery cells, preferably more than 70%, still preferably more than 90% and still more preferably equal to 100%.

Preferably, a refrigerant supply device may include two heat dissipation storage units and/or two pumps connected between the control unit and the heat dissipation storage units. Preferably the refrigerant supply device uses the two pumps to independently control circulation of refrigerant through the first refrigerant circulation pipe and circulation of refrigerant through the second refrigerant circulation pipe, so as to prevent a pump overload occurring in the case where a single pump is used to control both circulation of refrigerant through the first refrigerant circulation pipe and circulation of refrigerant through the second refrigerant circulation pipe. Preferably the two pumps may circulate the refrigerants in the first and second refrigerant circulation pipes with different speeds. Such a modified cooling process may result in a better balancing, for example if the first end of the battery stack would is exposed to heat from adjacent (other) devices (located in the close periphery of the first end of the battery stack), then the speed of the first refrigerant circulation pipe might be controlled to be greater than that of the second refrigerant circulation pipe. Preferably the control unit is adapted to determine the temperature profile of the battery stack along a direction extending from the first side to the second side (by determining the respective temperature of each of the battery cells) and to circulate the refrigerants in the first and second refrigerant circulation pipes with different speeds so as to balance the temperature profile of the battery stack.

According to at least one of embodiments, a battery pack includes: a plurality of battery cells arrayed from a first side to a second side; a first refrigerant circulation pipe having a first surface adjacent to outer surfaces of the battery cells, the first refrigerant circulation pipe extending from the first side of the battery cells to the second side, the first refrigerant circulation pipe being configured to supply refrigerant from the first side; and a second refrigerant circulation pipe adjacent to a second surface of the first refrigerant circulation pipe and extending from the first side of the battery cells to the second side, the second refrigerant circulation pipe being configured to supply refrigerant from the second side.

The battery pack may further include a first refrigerant supply pipe connected to a first side of the first refrigerant circulation pipe; a second refrigerant supply pipe connected to a second side of the second refrigerant circulation pipe; a pump configured to supply refrigerant to the first and second refrigerant supply pipes; a first refrigerant discharge pipe connected to a second side of the first refrigerant circulation pipe; a second refrigerant discharge pipe connected to a first side of the second refrigerant circulation pipe; and a heat dissipation storage unit configured to cool and store refrigerant discharged from the first and second refrigerant supply pipes and supply the cooled refrigerant to the pump.

The battery pack may further include a control unit configured to measure temperature of the battery cells and control operations of the pump and the heat dissipation storage unit according to a predetermined reference temperature value.

The first and second refrigerant supply pipes may receive refrigerant through branch supply pipes connected to the pump.

The first and second refrigerant circulation pipes each may have a pipe shape with a hollow at an inside from the first side of the battery cells to the second side.

The battery cell, the first refrigerant circulation pipe, and the second refrigerant circulation pipe may be identical in width.

The first refrigerant circulation pipe may include a first parallel pipe adjacent to one of the battery cells and extending along a width direction of the battery cell; a vertical pipe bent and extending from the first parallel pipe to the second side of the battery cells; and a second parallel pipe bent from the vertical pipe and extending along the width direction of the battery cell.

The second refrigerant circulation pipe may be identical in shape as the first refrigerant circulation pipe, and be adjacent to the second surface of the first refrigerant circulation pipe to correspond to a position of the first refrigerant circulation pipe.

The first refrigerant circulation pipe may include a first extension pipe adjacent to one of the battery cells and extending along the width direction of the battery cell; a second extension pipe adjacent to the battery cell adjacent to the battery cell to which the first extension pipe is adjacent, and extending along the width direction of the battery cell; and a curve pipe connecting the first extension pipe to the second extension pipe in a curve shape.

The second refrigerant circulation pipe may be identical in shape as the first refrigerant circulation pipe, and be adjacent to the second surface of the first refrigerant circulation pipe to correspond to the position of the first refrigerant circulation pipe.

The first surface of the first refrigerant circulation pipe may (preferably directly) contact the outer surfaces of the battery cells, and the second refrigerant circulation pipe may (preferably directly) contact the second surface of the first refrigerant circulation pipe.

According to another embodiment, a battery pack includes: a plurality of battery cells arrayed from a first side to a second side; a first refrigerant circulation pipe adjacent to outer surfaces of the battery cells, the first refrigerant circulation pipe extending from the first side of the battery cells to the second side, the first refrigerant circulation pipe being configured to supply refrigerant from the first side; and a second refrigerant circulation pipe adjacent to the outer surfaces of the battery cells, and the first refrigerant circulation pipe, the second refrigerant circulation pipe extending from the first side of the battery cells to the second side, the second refrigerant circulation pipe being configured to supply refrigerant from the second side.

The battery pack may further include a first refrigerant supply pipe connected to a first side of the first refrigerant circulation pipe; a second refrigerant supply pipe connected to a second side of the second refrigerant circulation pipe; a pump configured to supply refrigerant to the first and second refrigerant supply pipes; a first refrigerant discharge pipe connected to a second side of the first refrigerant circulation pipe; a second refrigerant discharge pipe connected to a first side of the second refrigerant circulation pipe; a heat dissipation storage unit configured to cool and store refrigerant discharged from the first and second refrigerant supply pipes and supply the cooled refrigerant to the pump; and a control unit configured to measure temperature of the battery cells and control operations of the pump and the heat dissipation storage unit according to a predetermined reference temperature value.

The first and second refrigerant supply pipes may receive refrigerant through branch supply pipes connected to the pump.

The first and second refrigerant circulation pipes each may have a pipe shape with a hollow at an inside from the first side of the battery cells to the second side.

The sum of a width of the first refrigerant circulation pipe and a width of the second refrigerant circulation pipe may be equal to a width of the battery cell.

The first refrigerant circulation pipe may include a first parallel pipe adjacent to one of the battery cells and extending along a width direction of the battery cell; a first vertical pipe bent and extending from the first parallel pipe to the second side of the battery cells; and a second parallel pipe bent from the first vertical pipe and extending along the width direction of the battery cell.

The second refrigerant circulation pipe may include a third parallel pipe adjacent to one of the battery cells and the first parallel pipe and extending along the width direction of the battery cell; a second vertical pipe adjacent to the first vertical pipe and bent and extending from the third parallel pipe to the second side; and a fourth parallel pipe adjacent to the second parallel pipe and bent from the second vertical pipe and extending along the width direction of the battery cell.

The first refrigerant circulation pipe may include a first extension pipe adjacent to one of the battery cells and extending along the width direction of the battery cell; a second extension pipe adjacent to the battery cell adjacent to the battery cell to which the first extension pipe is adjacent, and extending along the width direction of the battery cell; and a first curve pipe connecting the first extension pipe to the second extension pipe in a curve shape.

The second refrigerant circulation pipe may include a third extension pipe adjacent to one of the battery cells and the first extension pipe and extending along the width direction of the battery cell; a fourth extension pipe adjacent to the battery cell adjacent to the battery cell to which the third extension pipe is adjacent, the fourth extension pipe being adjacent to the second extension pipe and extending along the width direction of the battery cell; and a second curve pipe adjacent to the first curve pipe and connecting the third extension pipe to the fourth extension pipe in a curve shape.

The first refrigerant circulation pipe may (preferably directly) contact the outer surfaces of the battery cells, and the second refrigerant circulation pipe may (preferably directly) contact the outer surfaces of the battery cells and the first refrigerant circulation pipe.

The first and second refrigerant circulation pipes may be formed of one of copper and aluminum.

### [ADVANTAGEOUS EFFECT]

A battery pack according to embodiments includes refrigerant circulation pipes to cool heat generated when battery cells are repeatedly charged and discharged. The refrigerant circulation pipes in both directions uniformly cool the battery cells in the battery pack, so as to improve the stability and service life of the battery pack.

A battery pack according to embodiments includes a control unit configured to circulate refrigerant only at a necessary time and minimize the loss of power.

### [BRIEF DESCRIPTION OF THE DRAWINGS]

FIG. 1 is a perspective view illustrating a battery pack according to an embodiment.
FIG. 2A is a schematic view illustrating a refrigerant supply device and the circulation process of refrigerant in a battery pack according to an embodiment.
FIG. 2B is a schematic view illustrating a refrigerant supply device and the circulation process of refrigerant in a battery pack according to an embodiment.
FIG. 3 is a perspective view illustrating the lower portion of a battery pack according to an embodiment.
FIG. 4 is a perspective view illustrating the lower portion of a battery pack according to another embodiment.
FIG. 5 is a perspective view illustrating a battery pack according to another embodiment.
FIG. 6 is a perspective view illustrating the lower portion of a battery pack according to another embodiment.
FIG. 7 is a perspective view illustrating the lower portion of a battery pack according to another embodiment.
FIG. 8 is a perspective view illustrating a battery pack according to another embodiment.
FIG. 9 is a perspective view illustrating a battery pack according to another embodiment.

### [DETAILED DESCRIPTION FOR CARRYING OUT THE INVENTION]

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the disclosure to those skilled in the art.

Hereinafter, a configuration of a battery pack according to an embodiment will now be described.

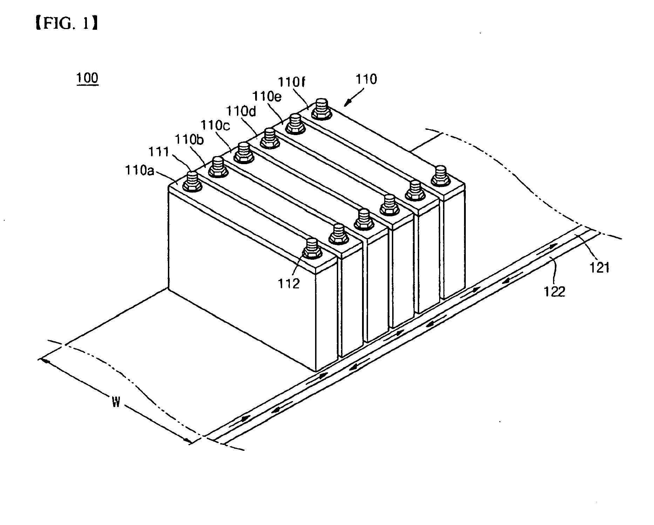

FIG. 1 is a perspective view illustrating the battery pack according to the current embodiment.

Referring to FIG. 1, a battery pack 100 according to the current embodiment includes battery cells 110, a first refrigerant circulation pipe 121, and a second refrigerant circulation pipe 122.

The battery cell 110 includes a first electrode terminal 111 and a second electrode terminal 112. The first electrode terminal 111 and the second electrode terminal 112 are disposed at the upper portion of the battery cell 110. The first electrode terminal 111 may have a positive or negative pole. The second electrode terminal 112 has the opposite pole to that of the first electrode terminal 111. The battery cells 110 are arrayed from a first side to a second side. The battery cells 110 are classified into first through sixth battery cells 110a, 110b, 110c, 1 1 0d, 110e, and 110f in order from the first side to the second side. However, the number of the battery cells 110 is not limited thereto. Secondary batteries, which are chargeable and dischargeable, may be used as the battery cells 110. Hereinafter, the large side of the battery cell 110 is referred to as a width, and a direction along the width is referred to as a width direction.

The first refrigerant circulation pipe 121 extends from the first side of the battery cells 110 to the second side, may have a pipe shape with a hollow at the inside. The first refrigerant circulation pipe 121 has a first surface that is adjacent to the outer surfaces of the battery cells 110. In detail, the upper surface of the first refrigerant circulation pipe 121 may directly contact the lower surfaces of the battery cells 110. A width W of the battery pack 100 may be equal to a width W of the first refrigerant circulation pipe 121. Accordingly, heat generated when the battery cells 110 are charged and discharged can be effectively cooled. Since the width of the battery cells 110 is equal to the width of the first refrigerant circulation pipe 121, the arrangement and structure of the battery cells 110 can be stably formed in the battery pack 100. In detail, the first refrigerant circulation pipe 121 may be formed of one of copper and aluminum, which have high heat conductivity. The first refrigerant circulation pipe 121 is configured to supply refrigerant from the first side of the battery cells 110 through the hollow at the inside. In detail, the first refrigerant circulation pipe 121 may be configured to supply refrigerant from the side where the first battery cell 110a is disposed.

The second refrigerant circulation pipe 122 extends from the first side of the battery cells 110 to the second side, may have a pipe shape with a hollow at the inside. The second refrigerant circulation pipe 122 is adjacent to a second surface of the first refrigerant circulation pipe 121. In detail, the upper surface of the second refrigerant circulation pipe 122 may directly contact the lower surface of the first refrigerant circulation pipe 121. The width W of the battery cells 110, the width W of the first refrigerant circulation pipe 121, and a width W of the second refrigerant circulation pipe 122 may be identical, and thus, the battery cells 110, the first refrigerant circulation pipe 121, and the second refrigerant circulation pipe 122 can be structurally stable in the battery pack 100. The second refrigerant circulation pipe 122 may be formed of one of copper and aluminum, which have high heat conductivity. The second refrigerant circulation pipe 122 is configured to supply refrigerant from the second side of the battery cells 110 through the hollow at the inside. In detail, the second refrigerant circulation pipe 122 may be configured to supply refrigerant from the side where the sixth battery cell 110f is disposed. The second refrigerant circulation pipe 122 supplies refrigerant from the second side to effectively cool heated refrigerant at the second side of the first refrigerant circulation pipe 121 directly contacting the second refrigerant circulation pipe 122.

Refrigerant in the first refrigerant circulation pipe 121 is heated while passing through the first through sixth battery cells 110a, 110b, 110c, 110d, 110e, and 110f. Since refrigerant absorbs heat from a battery cell, the temperature of the refrigerant is varied from the first side of a refrigerant circulation pipe to the second side. Thus, temperature variation may occur between a battery cell at the first side and a battery cell at the second side. However, in the battery pack 100 according to the current embodiment, the second refrigerant circulation pipe 122 directly contacts the first refrigerant circulation pipe 121 to decrease the temperature of heated refrigerant at the second side of the first refrigerant circulation pipe 121. Thus, the battery pack 100 can uniformly cool the battery cells 110.

Hereinafter, a refrigerant supply device and a circulation process of refrigerant in a battery pack according to an embodiment will now be described.

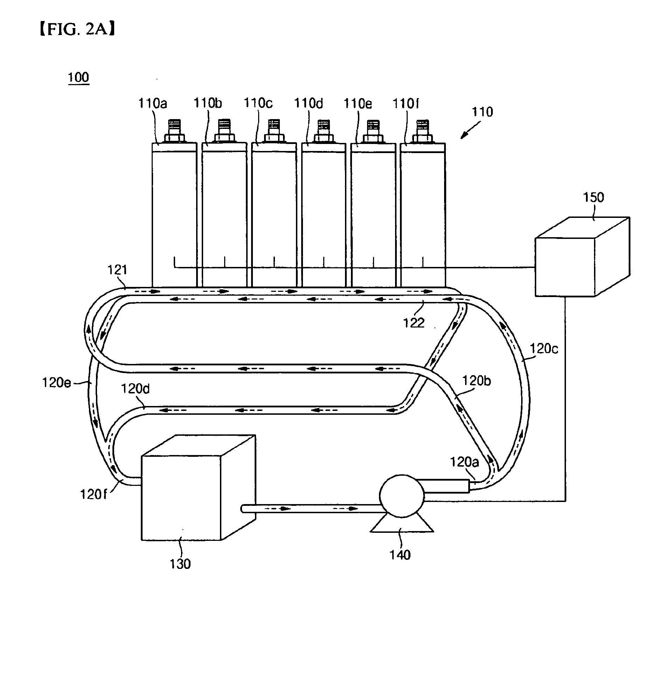

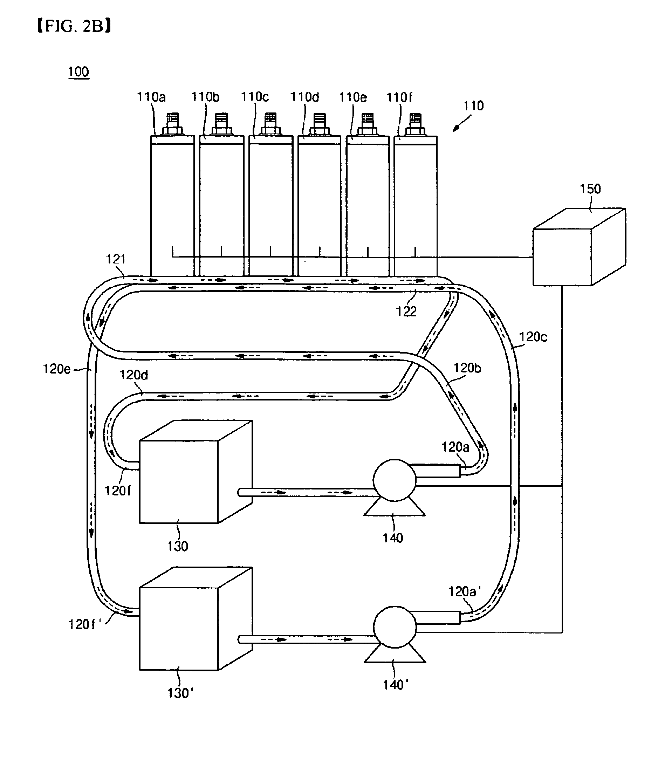

FIG. 2A is a schematic view illustrating the refrigerant supply device and the circulation process of refrigerant in the battery pack according to the current embodiment. FIG. 2B is another schematic view illustrating the refrigerant supply device and the circulation process of refrigerant in the battery pack according to the current embodiment.

Referring to FIG. 2A, the battery pack 100 may further include a refrigerant supply device. The refrigerant supply device includes a branch supply pipe 120a, a first refrigerant supply pipe 120b, a second refrigerant supply pipe 120c, a first refrigerator discharge pipe 120d, a second refrigerator discharge pipe 120e, a branch discharge pipe 120f, a heat dissipation storage unit 130, a pump 140, and a control unit 150.

The branch supply pipe 120a is connected to the pump 140 to be described later to function as a passage to which refrigerant is introduced.

The first refrigerant supply pipe 120b may have a pipe shape with a hollow at the inside. A first end of the first refrigerant supply pipe 120b is connected to the branch supply pipe 120a. A second end of the first refrigerant supply pipe 120b is connected to the first side of the first refrigerant circulation pipe 121. The first refrigerant supply pipe 120b functions as a passage configured to introduce refrigerant introduced from the branch supply pipe 120a to the first refrigerant circulation pipe 121.

The second refrigerant supply pipe 120c may have a pipe shape with a hollow at the inside. A first end of the second refrigerant supply pipe 120c is connected to the branch supply pipe 120a. A second end of the second refrigerant supply pipe 120c is connected to the second side of the second refrigerant circulation pipe 122. The second refrigerant supply pipe 120c functions as a passage configured to introduce refrigerant introduced from the branch supply pipe 120a to the second refrigerant circulation pipe 122.

The first refrigerant discharge pipe 120d may have a pipe shape with a hollow at the inside. A first end of the first refrigerant discharge pipe 120d is connected to the second side of the first refrigerant circulation pipe 121. The first refrigerant discharge pipe 120d functions as a passage through which refrigerant of the first refrigerant circulation pipe 121 is discharged after cooling the battery cells 110.

The second refrigerant discharge pipe 120e may have a pipe shape with a hollow at the inside. A first end of the second refrigerant discharge pipe 120e is connected to the first side of the second refrigerant circulation pipe 122. The second refrigerant discharge pipe 120e functions as a passage through which refrigerant of the second refrigerant circulation pipe 122 is discharged after cooling refrigerant of the first refrigerant circulation pipe 121.

The branch discharge pipe 120f may have a pipe shape with a hollow at the inside. The branch discharge pipe 120f is connected to a second end of the first refrigerant discharge pipe 120d and a second end of the second refrigerant discharge pipe 120e. The branch discharge pipe 120f functions as a passage to discharge refrigerator of the first refrigerant discharge pipe 120d and refrigerator of the second refrigerant discharge pipe 120e to the heat dissipation storage unit 130 to be described later.

The heat dissipation storage unit 130 cools refrigerant introduced through the branch discharge pipe 120f. In detail, the heat dissipation storage unit 130 may include a heat dissipation plate. The heat dissipation storage unit 130 stores cooled refrigerant.

The pump 140 introduces refrigerant cooled and stored at the heat dissipation storage unit 130 to the branch supply pipe 120a.

The control unit 150 measures the temperature of the battery cells 110 to control the heat dissipation storage unit 130 and the pump 140. In detail, when a temperature value of the battery cell 110 is greater than a predetermined reference temperature value, the control unit 150 operates the heat dissipation storage unit 130 and the pump 140. When a temperature value of the battery cell 110 is less than the predetermined reference temperature value, the control unit 150 may stop the heat dissipation storage unit 130 and the pump 140. Here, the predetermined reference temperature value is temperature staring to degrade the performance of the battery pack 100 and may be about 60 °C. Instead of continually circulating refrigerant, the battery cells 110 are cooled only at a necessary time by the operation of the control unit 150. Thus, the control unit 150 can suppress the loss of the entire power of the battery pack 100.

Although the refrigerant supply device illustrated in FIG. 2A includes the single heat dissipation storage unit 130 and the single pump 140, the refrigerant supply device may include a plurality of heat dissipation storage units and a plurality of single pumps. For example, as illustrated in FIG. 2B, a refrigerant supply device may include two heat dissipation storage units 130 and 130' and two pumps 140 and 140' connected between the control unit 150 and the heat dissipation storage units 130 and 130'. The second refrigerant supply pipe 120c for supplying refrigerant to the second refrigerant circulation pipe 122 is connected to a branch supply pipe 120a' connected to the pump 140'. The second refrigerant discharge pipe 120e for discharging refrigerant from the second refrigerant circulation pipe 122 is connected to a branch discharge pipe 120f' connected to the heat dissipation storage unit 130'. The refrigerant supply device illustrated in FIG. 2B uses the two pumps 140 and 140' to independently control circulation of refrigerant through the first refrigerant circulation pipe 121 and circulation of refrigerant through the second refrigerant circulation pipe 122, so as to prevent a pump overload occurring in the case where a single pump is used to control both circulation of refrigerant through the first refrigerant circulation pipe 121 and circulation of refrigerant through the second refrigerant circulation pipe 122.

Hereinafter, a configuration of a battery pack according to another embodiment will now be described.

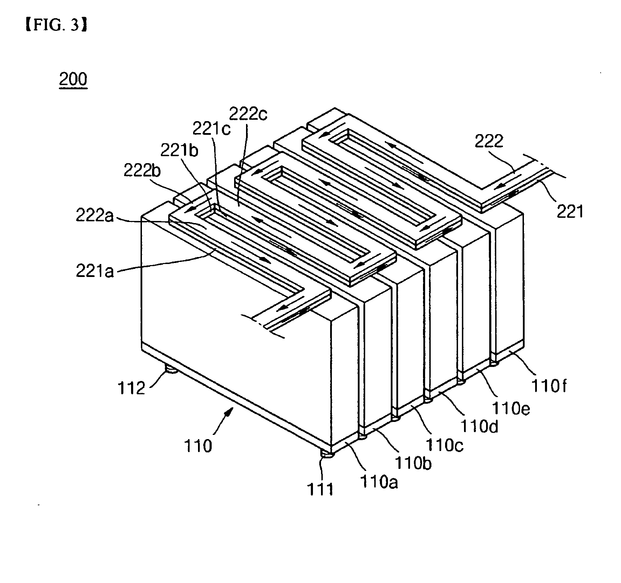

FIG. 3 is a perspective view illustrating the lower portion of the battery pack according to the current embodiment.

Referring to FIG. 3, a battery pack 200 according to the current embodiment is different from the battery pack 100 of FIG. 1 in structures of a first refrigerant circulation pipe 221 and a second refrigerant circulation pipe 222. Thus, the battery pack 200 will now be described with respect to the first refrigerant circulation pipe 221 and the second refrigerant circulation pipe 222. Like reference numerals denote like elements in the battery pack 100 of FIG. 1 and the battery pack 200, and descriptions thereof will be omitted.

The first refrigerant circulation pipe 221 extends from the first side of the battery cells 110 to the second side, may have a pipe shape with a hollow at the inside. The first refrigerant circulation pipe 221 has a first surface that is adjacent to the outer surfaces of the battery cells 110. In detail, the upper surface of the first refrigerant circulation pipe 221 may directly contact the lower surfaces of the battery cells 110. The first refrigerant circulation pipe 221 is configured to supply refrigerant from the first side of the battery cells 110 through the hollow at the inside. In detail, the first refrigerant circulation pipe 221 may be configured to supply refrigerant from the side where the first battery cell 110a is disposed. The first refrigerant circulation pipe 221 may include a first parallel pipe 221 a, a vertical pipe 221b, and a second parallel pipe 221c.

A first surface of the first parallel pipe 221a is adjacent to or in direct contact with a battery cell, for example the first battery cell 110a. The first parallel pipe 221a extends along the width direction of the first battery cell 110a.

The vertical pipe 221b is bent and extended from the first parallel pipe 221 a to the second side of the battery cells 110.

The second parallel pipe 221c is bent and extended from the vertical pipe 221b. A first surface of the second parallel pipe 221c is adjacent to or in direct contact with the second battery cell 110b adjacent to the first battery cell 110a. The second parallel pipe 221c extends along the width direction of the second battery cell 110b.

The first parallel pipe 221a, the vertical pipe 221b, and the second parallel pipe 221c of the first refrigerant circulation pipe 221 may be repeatedly formed according to the number and the size of the battery cells 110.

The second refrigerant circulation pipe 222 may be the same in shape as the first refrigerant circulation pipe 221. The second refrigerant circulation pipe 222 is adjacent to a second surface of the first refrigerant circulation pipe 221. In detail, the second refrigerant circulation pipe 222 may directly contact the lower surface of the first refrigerant circulation pipe 221. The second refrigerant circulation pipe 222 is configured to supply refrigerant from the second side of the battery cells 110 through the hollow at the inside. The second refrigerant circulation pipe 222 may overlap and be parallel to the second surface of the first refrigerant circulation pipe 221 to correspond to the position of the first refrigerant circulation pipe 221. The second refrigerant circulation pipe 222 may include a first parallel pipe 222a, a vertical pipe 222b, and a second parallel pipe 222c.

A first surface of the first parallel pipe 222a is adjacent to or in direct contact with the second surface of the first parallel pipe 221 a of the first refrigerant circulation pipe 221. The first parallel pipe 222a extends along the width direction of the first battery cell 110a.

The vertical pipe 222b is bent and extended from the first parallel pipe 222a to the second side of the battery cells 110. The vertical pipe 222b is adj acent to or in direct contact with the vertical pipe 221b of the first refrigerant circulation pipe 221.

The second parallel pipe 222c is bent and extended from the vertical pipe 222b. The second parallel pipe 222c is adjacent to or in direct contact with the second parallel pipe 221c of the first refrigerant circulation pipe 221. The second parallel pipe 222c extends along the width direction of the second battery cell 110b.

The first parallel pipe 222a, the vertical pipe 222b, and the second parallel pipe 222c of the second refrigerant circulation pipe 222 may be repeatedly formed according to the number and the size of the battery cells 110.

Hereinafter, a configuration of a battery pack according to another embodiment will now be described.

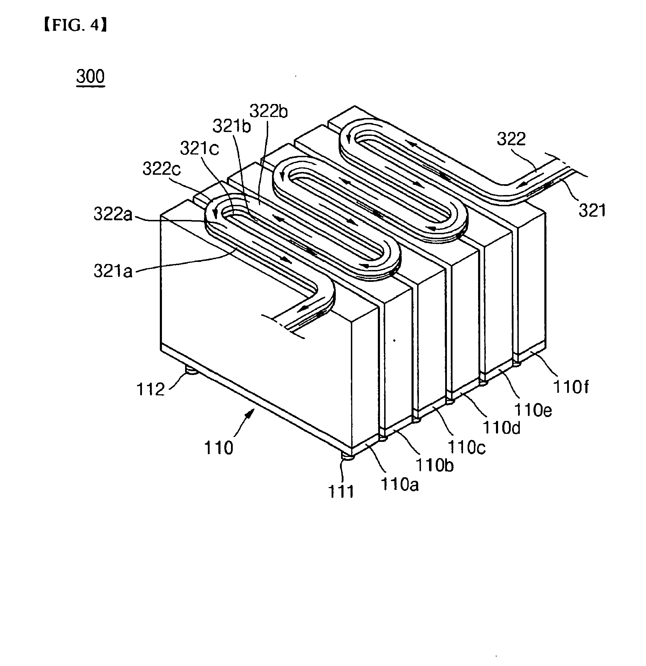

FIG. 4 is a perspective view illustrating the lower portion of the battery pack according to the current embodiment.

Referring to FIG. 4, a battery pack 300 according to the current embodiment is different from the battery pack 100 of FIG. 1 in structures of a first refrigerant circulation pipe 321 and a second refrigerant circulation pipe 322. Thus, the battery pack 300 will now be described with respect to the first refrigerant circulation pipe 321 and the second refrigerant circulation pipe 322. Like reference numerals denote like elements in the battery pack 100 of FIG. 1 and the battery pack 300, and descriptions thereof will be omitted.

The first refrigerant circulation pipe 321 extends from the first side of the battery cells 110 to the second side, may have a pipe shape with a hollow at the inside. The first refrigerant circulation pipe 321 has a first surface adjacent to the battery cells 110. In detail, the upper surface of the first refrigerant circulation pipe 321 may directly contact the lower surfaces of the battery cells 110. The first refrigerant circulation pipe 321 is configured to supply refrigerant from the first side of the battery cells 110 through the hollow at the inside. In detail, the first refrigerant circulation pipe 321 may be configured to supply refrigerant from the side where the first battery cell 110a is disposed. The first refrigerant circulation pipe 321 may include a first extension pipe 321a, a second extension pipe 321b, and a curve pipe 321c.

The first extension pipe 321a has a first surface that is adjacent to or in direct contact with a battery cell, for example the first battery cell 110a. The first extension pipe 321a extends along the width direction of the first battery cell 110a.

The second extension pipe 321b has a first surface that is adjacent to or in direct contact with the second battery cell 110b adjacent to the first battery cell 110a. The second extension pipe 321b extends along the width direction of the second battery cell 110b.

The curve pipe 321c connects the first extension pipe 321a to the second extension pipe 321b in a curve shape. Due to the curve shape of the curve pipe 321c, refrigerant flows efficiently.

The first extension pipe 321a, the second extension pipe 321b, and the curve pipe 321c of the first refrigerant circulation pipe 321 may be repeatedly formed according to the number and the size of the battery cells 110.

The second refrigerant circulation pipe 322 may be the same in shape as the first refrigerant circulation pipe 321. The second refrigerant circulation pipe 322 is adjacent to a second surface of the first refrigerant circulation pipe 321. In detail, the second refrigerant circulation pipe 322 may be adjacent to or in direct contact with the lower surface of the first refrigerant circulation pipe 321. The second refrigerant circulation pipe 322 is configured to supply refrigerant to the second side of the battery cells 110 through the hollow at the inside. The second refrigerant circulation pipe 322 may overlap and be parallel to the second surface of the first refrigerant circulation pipe 321 to correspond to the position of the first refrigerant circulation pipe 321. The second refrigerant circulation pipe 322 may include a first extension pipe 322a, a second extension pipe 322b, and a curve pipe 322c.

The first extension pipe 322a has a first surface that is adjacent to or in direct contact with a second surface of the first extension pipe 321a of the first refrigerant circulation pipe 321. The first extension pipe 322a extends along the width direction of the first battery cell 110a.

The second extension pipe 322b has a first surface that is in direct contact with a second surface of the second extension pipe 321b of the first refrigerant circulation pipe 321. The second extension pipe 322b extends along the width direction of the second battery cell 110b.

The curve pipe 322c connects the first extension pipe 322a to the second extension pipe 322b in a curve shape. Due to the curve shape of the curve pipe 322c, refrigerant flows efficiently.

The first extension pipe 322a, the second extension pipe 322b, and the curve pipe 322c of the second refrigerant circulation pipe 322 may be repeatedly formed according to the number and the size of the battery cells 110.

Hereinafter, a configuration of a battery pack according to another embodiment will now be described.

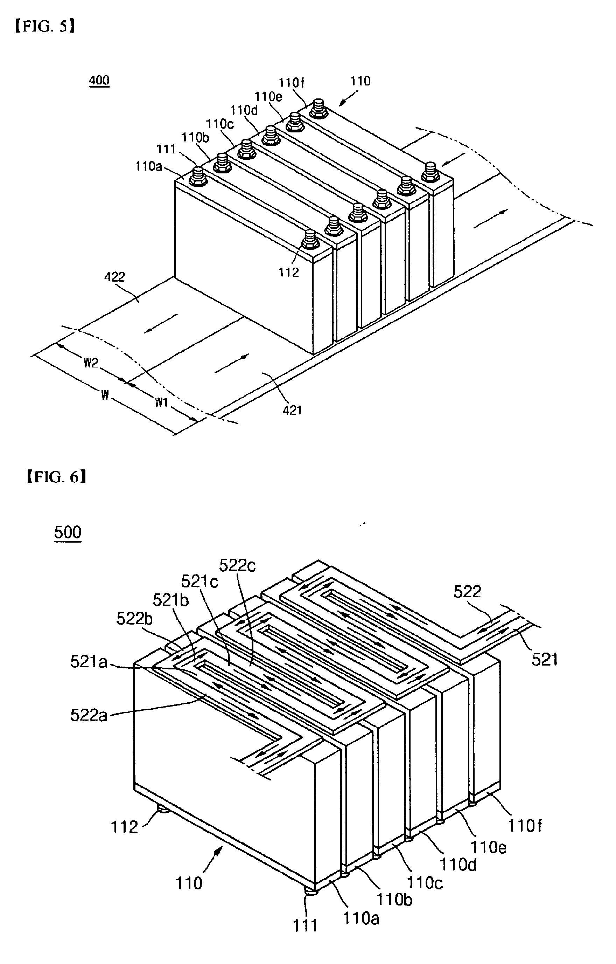

FIG. 5 is a perspective view illustrating the battery pack according to the current embodiment.

Referring to FIG. 5, a battery pack 400 according to the current embodiment is different from the battery pack 100 of FIG. 1 in structures of a first refrigerant circulation pipe 421 and a second refrigerant circulation pipe 422. Thus, the battery pack 400 will now be described with respect to the first refrigerant circulation pipe 421 and the second refrigerant circulation pipe 422. Like reference numerals denote like elements in the battery pack 100 of FIG. 1 and the battery pack 400, and descriptions thereof will be omitted.

The first refrigerant circulation pipe 421 extends from the first side of the battery cells 110 to the second side, may have a pipe shape with a hollow at the inside. The first refrigerant circulation pipe 421 is adjacent to the outer surfaces of the battery cells 110. In detail, the upper surface of the first refrigerant circulation pipe 421 may directly contact the lower surfaces of the battery cells 110. The first refrigerant circulation pipe 421 may be formed of one of copper and aluminum, which have high heat conductivity. The first refrigerant circulation pipe 421 is configured to supply refrigerant from the first side of the battery cells 110 through the hollow at the inside. In detail, the first refrigerant circulation pipe 421 may be configured to supply refrigerant from the side where the first battery cell 110a is disposed.

The second refrigerant circulation pipe 422 extends from the first side of the battery cells 110 to the second side, may have a pipe shape with a hollow at the inside. The second refrigerant circulation pipe 422 is adjacent to the outer surfaces of the battery cells 110 and to the first refrigerant circulation pipe 421. In detail, the second refrigerant circulation pipe 422 may directly contact the lower surfaces of the battery cells 110 and a side surface of the first refrigerant circulation pipe 421. The second refrigerant circulation pipe 422 may be formed of one of copper and aluminum, which have high heat conductivity. The second refrigerant circulation pipe 422 is configured to supply refrigerant from the second side of the battery cells 110 through the hollow at the inside. In detail, the second refrigerant circulation pipe 422 may be configured to supply refrigerant from the side where the sixth battery cell 110f is disposed.

The sum of a width W1 of the first refrigerant circulation pipe 421 and a width W2 of the second refrigerant circulation pipe 422 may be equal to the width W of the battery cell 110. Accordingly, heat generated when the battery cells 110 are charged and discharged is effectively cooled by the first refrigerant circulation pipe 421 and the second refrigerant circulation pipe 422. Since the sum of the width W1 of the first refrigerant circulation pipe 421 and the width W2 of the second refrigerant circulation pipe 422 is equal to the width W of the battery cell 110, the arrangement and structure of the battery cells 110, the first refrigerant circulation pipe 421, and the second refrigerant circulation pipe 422 can be stable.

Since the first refrigerant circulation pipe 421 through which refrigerant is supplied from the first side directly contacts the second refrigerant circulation pipe 422 through which refrigerant is supplied from the second side, the battery cells 110 can be effectively cooled in a balance state.

Hereinafter, a configuration of a battery pack according to another embodiment will now be described.

FIG. 6 is a perspective view illustrating the lower portion of the battery pack according to the current embodiment.

Referring to FIG. 6, a battery pack 500 according to the current embodiment is different from the battery pack 100 of FIG. 1 in structures of a first refrigerant circulation pipe 521 and a second refrigerant circulation pipe 522. Thus, the battery pack 500 will now be described with respect to the first refrigerant circulation pipe 521 and the second refrigerant circulation pipe 522. Like reference numerals denote like elements in the battery pack 100 of FIG. 1 and the battery pack 500, and descriptions thereof will be omitted.

The first refrigerant circulation pipe 521 extends from the first side of the battery cells 110 to the second side, may have a pipe shape with a hollow at the inside. The first refrigerant circulation pipe 521 has a first surface adjacent to the battery cells 110. In detail, the upper surface of the first refrigerant circulation pipe 521 may directly contact the lower surfaces of the battery cells 110. The first refrigerant circulation pipe 521 is configured to supply refrigerant from the first side of the battery cells 110 through the hollow at the inside. In detail, the first refrigerant circulation pipe 521 may be configured to supply refrigerant from the side where the first battery cell 110a is disposed. The first refrigerant circulation pipe 521 may include a first parallel pipe 521a, a first vertical pipe 521b, and a second parallel pipe 521c.

A first surface of the first parallel pipe 52 1 a is adj acent to or in direct contact with a battery cell, for example the first battery cell 110a. The first parallel pipe 521 a extends along the width direction of the first battery cell 110a.

The first vertical pipe 521b is bent and extended from the first parallel pipe 521 a to the second side of the battery cells 110.

The second parallel pipe 521c is bent and extended from the first vertical pipe 521b. A first surface of the second parallel pipe 521c is adjacent to or in direct contact with the second battery cell 110b adjacent to the first battery cell 110a. The second parallel pipe 521c extends along the width direction of the second battery cell 110b.

The first parallel pipe 521a, the first vertical pipe 521b, and the second parallel pipe 521c of the first refrigerant circulation pipe 521 may be repeatedly formed according to the number and the size of the battery cells 110.

The second refrigerant circulation pipe 522 extends from the first side of the battery cells 110 to the second side, may have a pipe shape with a hollow at the inside. The second refrigerant circulation pipe 522 is adjacent to the battery cells 110 and the first refrigerant circulation pipe 521. The second refrigerant circulation pipe 522 is configured to supply refrigerant from the second side of the battery cells 110 through the hollow at the inside. In detail, the second refrigerant circulation pipe 522 may be configured to supply refrigerant from the side where the sixth battery cell 110f is disposed. The second refrigerant circulation pipe 522 may include a third parallel pipe 522a, a second vertical pipe 522b, and a fourth parallel pipe 522c.

A first surface of the third parallel pipe 522a is adjacent to or in direct contact with the first battery cell 110a and the first parallel pipe 521a. The third parallel pipe 522a extends along the width direction of the first battery cell 110a.

The second vertical pipe 522b is bent and extended from the third parallel pipe 522a to the second side of the battery cells 110. The second vertical pipe 522b is adjacent to or in direct contact with the first vertical pipe 521b.

The fourth parallel pipe 522c is bent and extended from the second vertical pipe 522b. The fourth parallel pipe 522c is adjacent to or in direct contact with the second parallel pipe 521c and the second battery cell 110b. The fourth parallel pipe 522c extends along the width direction of the second battery cell 110b.

The third parallel pipe 522a, the second vertical pipe 522b, and the fourth parallel pipe 522c of the second refrigerant circulation pipe 522 may be repeatedly formed according to the number and the size of the battery cells 110.

Hereinafter, a configuration of a battery pack according to another embodiment will now be described.

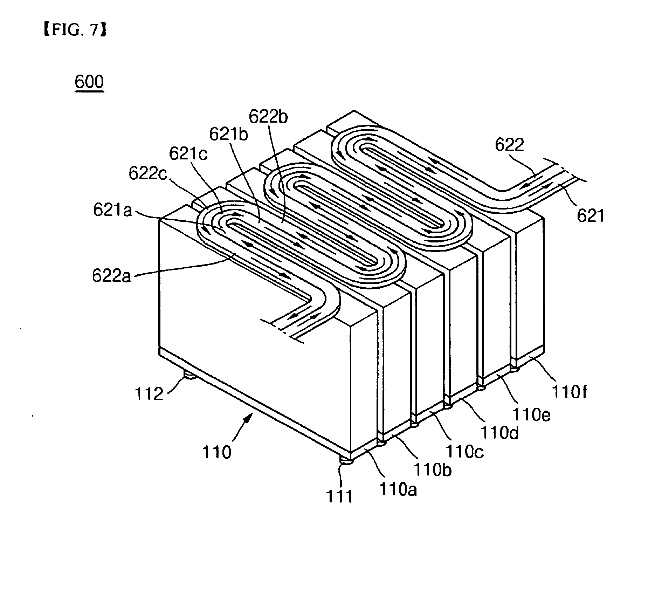

FIG. 7 is a perspective view illustrating the lower portion of the battery pack according to the current embodiment.

Referring to FIG. 7, a battery pack 600 according to the current embodiment is different from the battery pack 100 of FIG. 1 in structures of a first refrigerant circulation pipe 621 and a second refrigerant circulation pipe 622. Thus, the battery pack 600 will now be described with respect to the first refrigerant circulation pipe 621 and the second refrigerant circulation pipe 622. Like reference numerals denote like elements in the battery pack 100 of FIG. 1 and the battery pack 600, and descriptions thereof will be omitted.

The first refrigerant circulation pipe 621 extends from the first side of the battery cells 110 to the second side, may have a pipe shape with a hollow at the inside. The first refrigerant circulation pipe 621 has a first surface adjacent to the battery cells 110. In detail, the upper surface of the first refrigerant circulation pipe 621 may directly contact the lower surfaces of the battery cells 110. The first refrigerant circulation pipe 621 is configured to supply refrigerant from the first side of the battery cells 110 through the hollow at the inside. In detail, the first refrigerant circulation pipe 621 may be configured to supply refrigerant from the side where the first battery cell 110a is disposed. The first refrigerant circulation pipe 621 may include a first extension pipe 621a, a second extension pipe 621b, and a first curve pipe 621c.

A first surface of the first extension pipe 621a is adjacent to or in direct contact with a battery cell, for example the first battery cell 110a. The first extension pipe 621a extends along the width direction of the first battery cell 110a.

A first surface of the second extension pipe 621b is adjacent to or in direct contact with the second battery cell 110b adjacent to the first battery cell 110a. The second extension pipe 621b extends along the width direction of the second battery cell 110b.

The first curve pipe 621c connects the first extension pipe 621a to the second extension pipe 621b in a curve shape. Due to the curve shape of the first curve pipe 621 c, refrigerant flows efficiently.

The first extension pipe 621a, the second extension pipe 621b, and the first curve pipe 621c of the first refrigerant circulation pipe 621 may be repeatedly formed according to the number and the size of the battery cells 110.

The second refrigerant circulation pipe 622 extends from the first side of the battery cells 110 to the second side, may have a pipe shape with a hollow at the inside. The second refrigerant circulation pipe 622 is adjacent to the first refrigerant circulation pipe 621 and the battery cells 110. In detail, the second refrigerant circulation pipe 622 may directly contact a side surface of the first refrigerant circulation pipe 621 and the lower surfaces of the battery cells 110. The second refrigerant circulation pipe 622 is configured to supply refrigerant from the second side of the battery cells 110 through the hollow at the inside. In detail, the second refrigerant circulation pipe 622 may be configured to supply refrigerant from the side where the sixth battery cell 110f is disposed. The second refrigerant circulation pipe 622 may include a third extension pipe 622a, a fourth extension pipe 622b, and a second curve pipe 622c.

The third extension pipe 622a is adjacent to or in direct contact with the first extension pipe 621a of the first refrigerant circulation pipe 621, and the first battery cell 110a. The third extension pipe 622a extends along the width direction of the first battery cell 110a.

The fourth extension pipe 622b is adjacent to or in direct contact with the second extension pipe 621b of the first refrigerant circulation pipe 621, and the second battery cell 110b. The fourth extension pipe 622b extends along the width direction of the second battery cell 110b.

The second curve pipe 622c is adjacent to or in direct contact with the first curve pipe 621c of the first refrigerant circulation pipe 621. The second curve pipe 622c connects the third extension pipe 622a to the fourth extension pipe 622b in a curve shape. Due to the curve shape of the second curve pipe 622c, refrigerant flows efficiently.

The third extension pipe 622a, the fourth extension pipe 622b, and the second curve pipe 622c of the second refrigerant circulation pipe 622 may be repeatedly formed according to the number and the size of the battery cells 110.

Hereinafter, a configuration of a battery pack according to another embodiment will now be described.

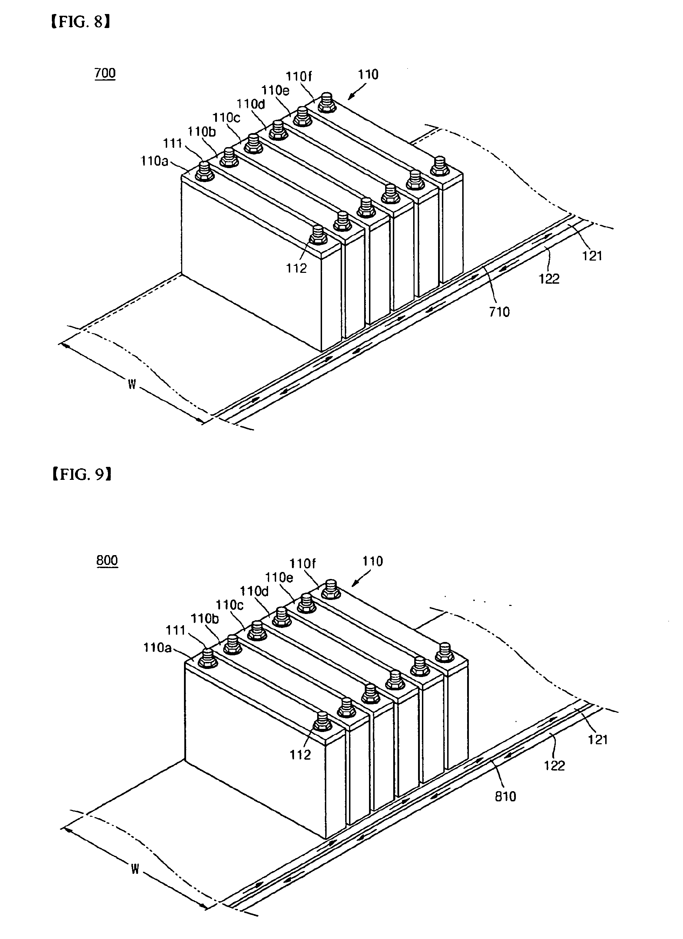

FIG. 8 is a perspective view illustrating the battery pack according to the current embodiment.

Referring to FIG. 8, a battery pack 700 according to the current embodiment is different from the battery pack 100 of FIG. 1 in that the battery pack 700 includes an intermediate medium 710. Thus, the battery pack 700 will now be described with respect to the intermediate medium 710. Like reference numerals denote like elements in the battery pack 100 of FIG. 1 and the battery pack 700, and descriptions thereof will be omitted.

The intermediate medium 710 is disposed between the battery cells 110 and the first refrigerant circulation pipe 121. When heat is generated during charge/discharge of the battery cells 110, the intermediate medium 710 uniformly transfers the heat to the first refrigerant circulation pipe 121, without concentrating the heat on a place. Accordingly, the intermediate medium 710 effectively removes heat generated during charge/discharge of the battery cells 110. The intermediate medium 710 may be formed of a material with a thermal conductivity of greater than 100 W/(m*K). The intermediate medium 710 may have a thin plate shape, and be formed of a metal material having high heat conductivity, such as copper and aluminum.

Although the intermediate medium 710 is disposed between the battery cells 110 and the first refrigerant circulation pipe 121 in FIG. 8, when the battery cells 110 contact the first and second refrigerant circulation pipes 421 and 422 at the same time as illustrated in FIG. 5, the intermediate medium 710 may be disposed between the battery cells 110 and the first refrigerant circulation pipe 421, and simultaneously, be disposed between the battery cells 110 and the second refrigerant circulation pipe 422.

Hereinafter, a configuration of a battery pack according to another embodiment will now be described.

FIG. 9 is a perspective view illustrating the battery pack according to the current embodiment.

Referring to FIG. 9, a battery pack 800 according to the current embodiment is different from the battery pack 100 of FIG. 1 in that the battery pack 800 includes an intermediate medium 810. Thus, the battery pack 800 will now be described with respect to the intermediate medium 810. Like reference numerals denote like elements in the battery pack 100 of FIG. 1 and the battery pack 800, and descriptions thereof will be omitted.

The intermediate medium 810 is disposed between the first refrigerant circulation pipe 121 and the second refrigerant circulation pipe 122. When heat is generated from the refrigerant of the first refrigerant circulation pipe 121 by the battery cells 110, the intermediate medium 810 uniformly transfers the heat to the second refrigerant circulation pipe 122, without concentrating the heat on a place. Accordingly, the intermediate medium 810 effectively removes heat generated during charge/discharge of the battery cells 110. The intermediate medium 810 may be formed of a material with a thermal conductivity of greater than 100 W/(m*K). The intermediate medium 810 may have a thin plate shape, and be formed of a metal material having high heat conductivity, such as copper and aluminum.

Exemplary embodiments have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present disclosure as set forth in the following claims.

### [DESCRIPTION OF SYMBOLS]

100, 200, 300, 400, 500, 600: Battery pack
110: Battery cell
121, 221, 321, 421, 521, 621: First refrigerant circulation pipe
122, 222, 322, 422, 522, 622: Second refrigerant circulation pipe
130: Heat dissipation storage unit
140: Pump
150: Control unit

## Claims

1. A battery pack, comprising:
a plurality of battery cells (110a, 110b, 110c, 110d, 110e, 110f) electrically connected to one another and arranged to extend from a first side to a second side of the battery pack; each of the battery cells (110a, 110b, 110c, 110d, 110e, 110f) comprising a lower surface, an upper surface, a first electrode terminal (111) and a second electrode terminal (112); wherein the first electrode terminal (111) and the second electrode terminal (112) are disposed at the upper surface of each of the plurality of battery cells (110a, 110b, 110c, 110d, 110e, 110f);a first refrigerant circulation pipe (121) arranged adjacent to the plurality of battery cells (110a, 110b, 110c, 110d, 110e, 110f);
a second refrigerant circulation pipe (122) arranged adjacent to the first refrigerant circulation pipe (121);
wherein the first refrigerant circulation pipe (121) and the second refrigerant circulation pipe (122) are located at the lower surface of each of the plurality of battery cells (110a, 110b, 110c, 110d, 110e, 110f);
wherein the first refrigerant circulation pipe (121) is adapted to guide a refrigerant from the first side to the second side of the battery pack and the second refrigerant circulation pipe (122) is adapted to guide a refrigerant from the second side of the battery pack (100) to the first side of the battery pack (100), and
wherein the surface area of the first refrigerant circulation pipe (121) and the second refrigerant circulation pipe (122) amounts to at least 50% of the surface area of the lower side of the battery cells.

2. The battery pack of claim 1, wherein at least one of the first refrigerant circulation pipe (121) and the second refrigerant circulation pipe (122) directly contacts the plurality of battery cells (110a, 110b, 110c, 110d, 110e, 110f), and/or wherein the first refrigerant circulation pipe (121) directly contacts the second refrigerant circulation pipe (122).

3. The battery pack of claim 1, wherein an intermediate medium (710) adapted to uniformly transfer heat is interposed between the plurality of battery cells (110a, 110b, 110c, 110d, 110e, 110f) and the first refrigerant circulation pipe (121) and/or wherein an intermediate medium (810) adapted to uniformly transfer heat is interposed between the first refrigerant circulation pipe (121) and the second refrigerant circulation pipe (122).

4. The battery pack according to any one of the preceding claims, further comprising:
a first refrigerant supply pipe (120b) connected to a first end of the first refrigerant circulation pipe (121), the first end of the first refrigerant circulation pipe (121) being located adjacent to the first side of the battery pack;
a first refrigerant discharge pipe (120d) connected to a second end of the first refrigerant circulation pipe (121), the second end of the first refrigerant circulation pipe (121) being located adjacent to the second side of the battery pack;
a second refrigerant supply pipe (120c) connected to a first end of the second refrigerant circulation pipe (122), the first end of the second refrigerant circulation pipe (122) being located adjacent to the second side of the battery pack;
a second refrigerant discharge pipe (120e) connected to a second end of the second refrigerant circulation pipe (122), the second end of the second refrigerant circulation pipe (122) being located adjacent to the first side of the battery pack;
at least one pump (140) adapted to supply a refrigerant to the first refrigerant supply pipe (120b) and to the second refrigerant supply pipe (120c); and
a heat dissipation storage unit (130) connected to the first refrigerant supply pipe (120b), the second refrigerant supply pipe (120c), the first refrigerant discharge pipe (120d) and the second refrigerant discharge pipe (120e) and being adapted to cool a refrigerant from the first refrigerant discharge pipe (120d) and the second refrigerant discharge pipe (120e).

5. The battery pack according to any one of the preceding claims, further comprising a control unit (150) adapted to determine a temperature of each of the plurality of battery cells (110a, 110b, 110c, 110d, 110e, 110f) and to control the at least one pump (140) depending on the determined temperatures of the plurality of battery cells (110a, 110b, 110c, 110d, 110e, 110f).

6. The battery pack according to claim 5, wherein the control unit (150) is adapted to activate the at least one pump (140) when a highest temperature of the plurality of battery cells (110a, 110b, 110c, 110d, 110e, 110f) is greater than a first predetermined value and/or wherein the control unit (150) is adapted to deactivate the at least one pump (140) when a highest temperature of the plurality of battery cells (110a, 110b, 110c, 110d, 110e, 110f) is smaller than a second predetermined value.

7. The battery pack according to any one of the preceding claims, wherein each of the first refrigerant circulation pipe (121) and/or the second refrigerant circulation pipe (122) is formed of a material with a thermal conductivity of greater than 100 W/(m*K).

8. The battery pack according to any one of the preceding claims, wherein the first refrigerant circulation pipe (121) is formed along a first circulation path between the first side and the second side of the battery pack and the second refrigerant circulation pipe (122) is formed along a second circulation path between the first side and the second side of the battery pack, wherein the first circulation path is arranged concurrent with the second circulation path.

9. The battery pack according to any one of the preceding claims, wherein the first refrigerant circulation pipe (421, 521, 621) and the second refrigerant circulation pipe (422, 522, 622) are arranged side by side.

10. The battery pack according to any one of claims 2 to 8, wherein the second refrigerant circulation pipe (422, 522, 622) is stacked on the first refrigerant circulation pipe (121, 221, 321).

11. The battery pack according to any one of the preceding claims, wherein the shape of the first refrigerant circulation pipe (121, 221, 321, 421) is the same as the shape of the second refrigerant circulation pipe (122, 222, 322, 422).

12. The battery pack according to any one of the preceding claims, wherein a width of the first refrigerant circulation pipe (121) and a width of the second refrigerant circulation pipe (122) is the same as a width of the plurality of battery cells (110a, 110b, 110c, 110d, 110e, 110f) or wherein the sum of a width of the first refrigerant circulation pipe (421) and a width of the second refrigerant circulation pipe (422) is the same as a width of the plurality of battery cells (110a, 110b, 110c, 110d, 1.10e, 110f).

13. The battery pack according to any one of the preceding claims, wherein each of the first refrigerant circulation pipe (121, 221, 321, 421, 521, 621) and the second refrigerant circulation pipe (122, 222, 322, 422, 522, 622) comprises a longish, strip-like shape having a uniform width along its extension from the first side to the second side of the battery pack.

14. The battery pack according to any one of the preceding claims, wherein each of the first refrigerant circulation pipe (221, 321, 521, 621) and the second refrigerant circulation pipe (222, 322, 522, 622) comprises parallel portions (221a, 221c, 222a, 222c, 321a, 322a, 322b, 521a, 521c, 522a, 522c, 621a, 621b, 622a, 622b) corresponding to the number and location of the plurality of battery cells (110a, 110b, 110c, 110d, 110e, 110f), each parallel portion (221a, 221c, 222a, 222c, 321a, 322a, 322b, 521a, 521c, 522a, 522c, 621a, 621b, 622a, 622b) contacting one of the plurality of battery cells (110a, 110b, 110c, 110d, 110e, 110f) and extending in a direction perpendicular to an axis extending from the first side to the second side of the battery pack, wherein the parallel portions (221a, 221c, 321a, 521a, 521c, 621a, 621b) of the first refrigerant circulation pipe (221, 321, 521, 621) interdigitate with the parallel portions (222a, 222c, 322a, 322b, 522a, 522c, 622a, 622b) of the second refrigerant circulation pipe (222, 322, 522, 622), and wherein adjacent parallel portions (221a, 221c, 222a, 222c, 321a, 322a, 322b, 521a, 521c, 522a, 522c, 621a, 621b, 622a, 622b) are connected by connecting portions (221b, 222b, 321c, 322c, 521b, 522b, 621c, 622c).

15. The battery pack according to claim 14, wherein the connecting portions (221b, 222b, 521b, 522b) are formed as vertical portions having a stripe-like shape, the longitudinal axes of the connecting portions (221b, 222b, 521b, 522b) being perpendicular to the parallel portions (221a, 221c, 222a, 222c, 521a, 521c, 522a, 522c) or wherein the connecting portions (321c, 322c, 621c, 622c) are formed as curved portions.

## Patentansprüche

1. Batteriepack, umfassend:
eine Vielzahl von Batteriezellen (110a, 110b, 110c, 110d, 110e, 110f), die elektrisch miteinander verbunden und so angeordnet sind, dass sie sich von einer ersten Seite zu einer zweiten Seite des Batteriepacks erstrecken; wobei jede der Batteriezellen (110a, 110b, 110c, 110d, 110e, 110f) eine untere Fläche, eine obere Fläche, eine erste Elektrodenklemme (111) und eine zweite Elektrodenklemme (112) aufweist,
wobei die erste Elektrodenklemme (111) und die zweite Elektrodenklemme (112) an der oberen Fläche jeder der Vielzahl von Batteriezellen (110a, 110b, 11 0c, 110d, 110,e 110f) angeordnet sind,
eine anliegend an der Vielzahl von Batteriezellen (110a, 110b, 110c, 110d, 110e, 110f) angeordnete erste Kältemittelumlaufleitung (121);
eine anliegend an der ersten Kältemittelumlaufleitung (121) angeordnete zweite Kältemittelumlaufleitung (122);
wobei sich die erste Kältemittelumlaufleitung (121) und die zweite Kältemittelumlaufleitung (122) an der unteren Fläche jeder der Vielzahl von Batteriezellen (110a, 110b, 110c, 110d, 110e, 110f) befinden;
wobei die erste Kältemittelumlaufleitung (121) zum Leiten eines Kältemittels von der ersten Seite zur zweiten Seite des Batteriepacks ausgebildet ist und die zweite Kältemittelumlaufleitung (122) zum Leiten eines Kältemittels von der zweiten Seite des Batteriepacks (100) zur ersten Seite des Batteriepacks (100) ausgebildet ist, und
wobei die Fläche der ersten Kältemittelumlaufleitung (121) und der zweiten Kältemittelumlaufleitung (122) mindestens 50% der Fläche der Unterseite der Batteriezellen beträgt.

2. Batteriepack nach Anspruch 1, wobei mindestens eine der ersten Kältemittelumlaufleitung (121) und der zweiten Kältemittelumlaufleitung (122) in direktem Kontakt mit der Vielzahl von Batteriezellen (110a, 110b, 110c, 110d, 110e, 110f) steht, und/oder wobei die erste Kältemittelumlaufleitung (121) in direktem Kontakt mit der zweiten Kältemittelumlaufleitung (122) steht.

3. Batteriepack nach Anspruch 1, wobei ein zur gleichmäßigen Wärmeübertragung ausgebildetes Zwischenmedium (710) zwischen die Vielzahl von Batteriezellen (110a, 110b, 110c, 110d, 110e, 110f) und die erste Kältemittelumlaufleitung (121) geschaltet ist, und/oder wobei ein zur gleichmäßigen Wärmeübertragung ausgebildetes Zwischenmedium (810) zwischen die erste Kältemittelumlaufleitung (121) und die zweite Kältemittelumlaufleitung (122) geschaltet ist.

4. Batteriepack nach einem der vorstehenden Ansprüche, ferner umfassend:
eine mit einem ersten Ende der ersten Kältemittelumlaufleitung (121) verbundene erste Kältemittelzuführungsleitung (120b), wobei sich das erste Ende der ersten Kältemittelumlaufleitung (121) anliegend an der ersten Seite des Batteriepacks befindet;
eine mit einem zweiten Ende der ersten Kältemittelumlaufleitung (121) verbundene erste Kältemittelabflussleitung (120d), wobei sich das zweite Ende der ersten Kältemittelumlaufleitung (121) anliegend an der zweiten Seite des Batteriepacks befindet;
eine mit einem ersten Ende der zweiten Kältemittelumlaufleitung (122) verbundene zweite Kältemittelzuführungsleitung (120c), wobei sich das erste Ende der zweiten Kältemittelumlaufleitung (122) anliegend an der zweiten Seite des Batteriepacks befindet;
eine mit einem zweiten Ende der zweiten Kältemittelumlaufleitung (122) verbundene zweite Kältemittelabflussleitung (120e), wobei sich das zweite Ende der zweiten Kältemittelumlaufleitung (122) anliegend an der ersten Seite des Batteriepacks befindet;
mindestens eine Pumpe (140), die zum Zuführen eines Kältemittels an die erste Kältemittelzuführungsleitung (120b) und die zweite Kältemittelzuführungsleitung (120c) ausgebildet ist; und
eine Wärmeabfuhrspeichereinheit (130), die mit der ersten Kältemittelzuführungsleitung (120b), der zweiten Kältemittelzuführungsleitung (120c), der ersten Kältemittelabflussleitung (120d) und der zweiten Kältemittelabflussleitung (120e) verbunden und ausgebildet ist, ein Kältemittel aus der ersten Kältemittelabflussleitung (120d) und der zweiten Kältemittelabflussleitung (120e) zu kühlen.

5. Batteriepack nach einem der vorstehenden Ansprüche, ferner umfassend eine Steuereinheit (150), die zum Bestimmen einer Temperatur jeder der Vielzahl von Batteriezellen (110a, 110b, 110c, 110d, 110e, 110f) sowie zum Steuern der mindestens einen Pumpe (140) in Abhängigkeit der bestimmten Temperaturen der Vielzahl von Batteriezellen (110a, 110b, 110c, 110d, 110e, 110f) ausgebildet ist.

6. Batteriepack nach Anspruch 5, wobei die Steuereinheit (150) zum Aktivieren der mindestens einen Pumpe (140) ausgebildet ist, wenn eine Höchsttemperatur der Vielzahl von Batteriezellen (110a, 110b, 110c, 110d, 110e, 110f) einen ersten vorbestimmten Wert übersteigt, und/oder wobei die Steuereinheit (150) zum Deaktivieren der mindestens einen Pumpe (140) ausgebildet ist, wenn eine Höchsttemperatur der Vielzahl von Batteriezellen (110a, 110b, 110c, 110d, 110e, 110f) unter einem zweiten vorbestimmten Wert liegt.

7. Batteriepack nach einem der vorstehenden Ansprüche, wobei jede der ersten Kältemittelumlaufleitung (121) und/oder der zweiten Kältemittelumlaufleitung (122) aus einem Material besteht, das eine Wärmeleitfähigkeit von größer als 100 W/(m*K) aufweist.

8. Batteriepack nach einem der vorstehenden Ansprüche, wobei die erste Kältemittelumlaufleitung (121) entlang eines ersten Umlaufpfads zwischen der ersten Seite und der zweiten Seite des Batteriepacks ausgebildet ist und die zweite Kältemittelumlaufleitung (122) entlang eines zweiten Umlaufpfads zwischen der ersten Seite und der zweiten Seite des Batteriepacks ausgebildet ist, wobei der erste Umlaufpfad übereinstimmend mit dem zweiten Umlaufpfad angeordnet ist.

9. Batteriepack nach einem der vorstehenden Ansprüche, wobei die erste Kältemittelumlaufleitung (421, 521, 621) und die zweite Kältemittelumlaufleitung (422, 522, 622) nebeneinander angeordnet sind.

10. Batteriepack nach einem der Ansprüche 2 bis 8, wobei die zweite Kältemittelumlaufleitung (422, 522, 622) über der ersten Kältemittelumlaufleitung (121, 221, 321) angeordnet ist.

11. Batteriepack nach einem der vorstehenden Ansprüche, wobei die Form der ersten Kältemittelumlaufleitung (121, 221, 321, 421) der Form der zweiten Kältemittelumlaufleitung (122, 222, 322, 422) entspricht.

12. Batteriepack nach einem der vorstehenden Ansprüche, wobei eine Breite der ersten Kältemittelumlaufleitung (121) und eine Breite der zweiten Kältemittelumlaufleitung (122) einer Breite der Vielzahl von Batteriezellen (110a, 110b, 110c, 110d, 110e, 110f) entsprechen, oder wobei die Summe einer Breite der ersten Kältemittelumlaufleitung (421) und einer Breite der zweiten Kältemittelumlaufleitung (422) einer Breite der Vielzahl von Batteriezellen (110a, 110b, 110c, 110d, 110e, 110f) entspricht.

13. Batteriepack nach einem der vorstehenden Ansprüche, wobei jede der ersten Kältemittelumlaufleitung (121, 221, 321, 421, 521, 621) und der zweiten Kältemittelumlaufleitung (122, 222, 322, 422, 522, 622) eine längliche, streifenähnliche Form mit einer gleichmäßigen Breite entlang ihres Verlaufs von der ersten Seite zur zweiten Seite des Batteriepacks aufweist.

14. Batteriepack nach einem der vorstehenden Ansprüche, wobei jede der ersten Kältemittelumlaufleitung (221, 321, 521, 621) und der zweiten Kältemittelumlaufleitung (222, 322, 522, 622) Parallelabschnitte (221 a, 221 c, 222a, 222c, 321 a, 322a, 322b, 521 a, 521 c, 522a, 522c, 621 a, 621 b, 622a, 622b) umfasst, die der Anzahl und der Lage der Vielzahl von Batteriezellen (110a, 110b, 110c, 110d, 110e, 110f) entsprechen, wobei jeder Parallelabschnitt (221 a, 221 c, 222a 222c, 321 a, 322a, 322b, 521 a, 521 c, 522a, 522c, 621 a, 621 b, 622a, 622b) in Kontakt mit einer der Vielzahl von Batteriezellen (110a, 110b, 110c, 110d, 110e, 110f) steht und sich in eine Richtung senkrecht zu einer sich von der ersten Seite zur zweiten Seite des Batteriepacks erstreckenden Achse erstreckt, wobei die Parallelabschnitte (221 a, 221 c, 321 a, 521 a, 521 c, 621 a, 621 b) der ersten Kältemittelumlaufleitung (221, 321, 521, 621) mit den Parallelabschnitten (222a, 222c, 322a, 322b, 522a, 522c, 622a, 622b) der zweiten Kältemittelumlaufleitung (222, 322, 522, 622) ineinander greifen, und wobei anliegende Parallelabschnitte (221 a, 221 c, 222a, 222c, 321 a, 322a, 322b, 521 a, 521 c, 522a, 522c, 621 a, 621 b, 622a, 622b) durch Verbindungsabschnitte (221 b, 222b, 321 c, 322c, 521 b, 522b, 621 c, 622c) verbunden sind.

15. Batteriepack nach Anspruch 14, wobei die Verbindungsabschnitte (221 b, 222b, 521 b, 522b) als Vertikalabschnitte mit streifenähnlicher Form ausgebildet sind, wobei die Längsachsen der Verbindungsabschnitte (221 b, 222b, 521 b, 522b) senkrecht zu den Parallelabschnitten (221 a, 221 c, 222a, 222c, 521 a, 521 c, 522a, 522c) liegen, oder wobei die Verbindungsabschnitte (321 c, 322c, 621 c, 622c) als gekrümmte Abschnitte ausgebildet sind.

## Revendications

1. Bloc-batterie, comprenant :
une pluralité d'éléments (110a, 110b, 110c, 110d, 110e, 110f) de batterie électriquement reliés les uns aux autres et adaptés pour s'étendre d'un premier côté jusqu'à un deuxième côté du bloc-batterie ; chacun des éléments (110a, 110b, 110c, 110d, 110e, 110f) de batterie comprenant une surface inférieure, une surface supérieure, une première borne (111) d'électrode et une deuxième borne (112) d'électrode ; où la première borne (111) d'électrode et la deuxième borne (112) d'électrode sont disposées au niveau de la surface supérieure de chacun de la pluralité d'éléments (110a, 110b, 110c, 110d, 110e, 110f) de batterie ; un premier tuyau (121) de circulation de fluide frigorigène disposé adjacent à la pluralité d'éléments (110a, 110b, 110c, 110d, 110e, 110f) de batterie ;
un deuxième tuyau (122) de circulation de fluide frigorigène disposé adjacent au premier tuyau (121) de circulation de fluide frigorigène ;
où le premier tuyau (121) de circulation de fluide frigorigène et le deuxième tuyau (122) de circulation de fluide frigorigène sont situés au niveau de la surface inférieure de chacun de la pluralité d'éléments (110a, 110b, 110c, 110d, 110e, 110f) de batterie ;
où le premier tuyau (121) de circulation de fluide frigorigène est adapté pour guider un fluide frigorigène depuis le premier côté jusqu'au deuxième côté du bloc-batterie et le deuxième tuyau (122) de circulation de fluide frigorigène est adapté pour guider un fluide frigorigène depuis le deuxième côté du bloc-batterie (100) jusqu'au premier côté du bloc-batterie (100), et
où la superficie du premier tuyau (121) de circulation de fluide frigorigène et le deuxième tuyau (122) de circulation de fluide frigorigène s'élève à au moins 50 % de la superficie du côté inférieur des éléments de batterie.

2. Bloc-batterie de la revendication 1, dans lequel au moins l'un du premier tuyau (121) de circulation de fluide frigorigène et du deuxième tuyau (122) de circulation de fluide frigorigène rentre directement en contact avec la pluralité d'éléments (110a, 110b, 110c, 110d, 110e, 110f) de batterie et/ou dans lequel le premier tuyau (121) de circulation de fluide frigorigène rentre directement en contact avec le deuxième tuyau (122) de circulation de fluide frigorigène.

3. Bloc-batterie de la revendication 1, dans lequel un milieu intermédiaire (710) adapté pour transférer de la chaleur de manière uniforme est interposé entre la pluralité d'éléments (110a, 110b, 110c, 110d, 110e, 110f) de batterie et le premier tuyau (121) de circulation de fluide frigorigène et/ou dans lequel un milieu intermédiaire (810) adapté pour transférer de la chaleur de manière uniforme est interposé entre le premier tuyau (121) de circulation de fluide frigorigène et le deuxième tuyau (122) de circulation de fluide frigorigène.

4. Bloc-batterie selon l'une quelconque des revendications précédentes, comprenant en outre :
un premier tuyau (120b) d'alimentation en fluide frigorigène relié à une première extrémité du premier tuyau (121) de circulation de fluide frigorigène, la première extrémité du premier tuyau (121) de circulation de fluide frigorigène étant située adjacente au premier côté du bloc-batterie ;
un premier tuyau (120d) d'évacuation de fluide frigorigène relié à une deuxième extrémité du premier tuyau (121) de circulation de fluide frigorigène, la deuxième extrémité du premier tuyau (121) de circulation de fluide frigorigène étant située adjacente au deuxième côté du bloc-batterie ;
un deuxième tuyau (120c) d'alimentation en fluide frigorigène relié à une première extrémité du deuxième tuyau (122) de circulation de fluide frigorigène, la première extrémité du deuxième tuyau (122) de circulation de fluide frigorigène étant située adjacente au deuxième côté du bloc-batterie ;
un deuxième tuyau (120e) d'évacuation de fluide frigorigène relié à une deuxième extrémité du deuxième tuyau (122) de circulation de fluide frigorigène, la deuxième extrémité du deuxième tuyau (122) de circulation de fluide frigorigène étant située adjacente au premier côté du bloc-batterie ;
au moins une pompe (140) adaptée pour alimenter un fluide frigorigène au premier tuyau (120b) d'alimentation en fluide frigorigène et au deuxième tuyau (120c) d'alimentation en fluide frigorigène ; et
une unité (130) de stockage de perte de chaleur reliée au premier tuyau (120b) d'alimentation en fluide frigorigène, au deuxième tuyau (120c) d'alimentation en fluide frigorigène, au premier tuyau (120d) d'évacuation de fluide frigorigène et au deuxième tuyau (120e) d'évacuation de fluide frigorigène et étant adapté pour refroidir un fluide frigorigène provenant du premier tuyau (120d) d'évacuation de fluide frigorigène et du deuxième tuyau (120e) d'évacuation de fluide frigorigène.

5. Bloc-batterie selon l'une quelconque des revendications précédentes, comprenant en outre une unité de commande (150) adaptée pour déterminer une température de chacun de la pluralité d'éléments (110a, 110b, 110c, 110d, 110e, 110f) de batterie et pour commander l'au moins une pompe (140) en fonction des températures déterminées de la pluralité d'éléments (110a, 110b, 110c, 110d, 110e, 110f) de batterie.

6. Bloc-batterie selon la revendication 5, dans lequel l'unité de commande (150) est adaptée pour activer l'au moins une pompe (140) lorsque la température la plus élevée de la pluralité d'éléments (110a, 110b, 110c, 110d, 110e, 110f) de batterie est supérieure à une première valeur prédéterminée et/ou dans lequel l'unité de commande (150) est adaptée pour désactiver l'au moins une pompe (140) lorsque la température la plus élevée de la pluralité d'éléments (110a, 110b, 110c, 110d, 110e, 110f) de batterie est inférieure à une deuxième valeur prédéterminée.

7. Bloc-batterie selon l'une quelconque des revendications précédentes, dans lequel chacun du premier tuyau (121) de circulation de fluide frigorigène et/ou du deuxième tuyau (122) de circulation de fluide frigorigène est réalisé en un matériau présentant une conductivité thermique supérieure à 100 W/(m*K).

8. Bloc-batterie selon l'une quelconque des revendications précédentes, dans lequel le premier tuyau (121) de circulation de fluide frigorigène est formé le long d'un premier chemin de circulation entre le premier côté et le deuxième côté du bloc-batterie et le deuxième tuyau (122) de circulation de fluide frigorigène est formé le long d'un deuxième chemin de circulation entre le premier côté et le deuxième côté du bloc-batterie, où le premier chemin de circulation est agencé à cocourant avec le deuxième chemin de circulation.

9. Bloc-batterie selon l'une quelconque des revendications précédentes, dans lequel le premier tuyau (421, 521, 621) de circulation de fluide frigorigène et le deuxième tuyau (422, 522, 622) de circulation de fluide frigorigène sont disposés l'un à côté de l'autre,

10. Bloc-batterie selon l'une quelconque des revendications 2 à 8, dans lequel le deuxième tuyau (422, 522, 622) de circulation de fluide frigorigène est empilé sur le premier tuyau (121, 221, 321) de circulation de fluide frigorigène.

11. Bloc-batterie selon l'une quelconque des revendications précédentes, dans lequel la forme du premier tuyau (121, 221, 321, 421) de circulation de fluide frigorigène est la même que celle du deuxième tuyau (122, 222, 322, 422) de circulation de fluide frigorigène.

12. Bloc-batterie selon l'une quelconque des revendications précédentes, dans lequel une largeur du premier tuyau (121) de circulation de fluide frigorigène et une largeur du deuxième tuyau (122) de circulation de fluide frigorigène est la même que celle de la pluralité d'éléments (110a, 110b, 110c, 110d, 110e, 110f) de batterie ou dans lequel la somme d'une largeur du premier tuyau (421) de circulation de fluide frigorigène et d'une largeur du deuxième tuyau (422) de circulation de fluide frigorigène est égale à une largeur de la pluralité d'éléments (110a, 110b, 110c, 110d, 110e, 110f) de batterie.

13. Bloc-batterie selon l'une quelconque des revendications précédentes, dans lequel chacun du premier tuyau (121, 221, 321, 421, 521, 621) de circulation de fluide frigorigène et du deuxième tuyau (122, 222, 322, 422, 522, 622) de circulation de fluide frigorigène est en forme de bande assez longue ayant une largeur uniforme le long de son extension depuis le premier côté au deuxième côté du bloc-batterie.

14. Bloc-batterie selon l'une quelconque des revendications précédentes, dans lequel chacun du premier tuyau (221, 321, 521, 621) de circulation de fluide frigorigène et du deuxième tuyau (222, 322, 522, 622) de circulation de fluide frigorigène comprend des parties parallèles (221a, 221c, 222a, 222c, 321a, 322a, 322b, 521a, 521c, 522a, 522c, 621a, 621b, 622a, 622b) correspondant au nombre et à l'emplacement de la pluralité d'éléments (110a, 110b, 110c, 110d, 110e, 110f) de batterie, chaque partie parallèle (221a, 221c, 222a, 222c, 321a, 322a, 322b, 521a, 521c, 522a, 522c, 621a, 621b, 622a, 622b) étant en contact avec l'un de la pluralité d'éléments (110a, 110b, 110c, 110d, 110e, 110f) de batterie et s'étendant dans une direction perpendiculaire à un axe s'étendant du premier côté au deuxième côté du bloc-batterie, où les parties parallèles (221a, 221c, 321a, 521a, 521c, 621a, 621b) du premier tuyau (221, 321, 521, 621) de circulation de fluide frigorigène et les parties parallèles (222a, 222c, 322a, 322b, 522a, 522c, 622a, 622b) du deuxième tuyau (222, 322, 522, 622) de circulation de fluide frigorigène s'entrelacent, et où des parties parallèles adjacentes (221a, 221c, 222a, 222c, 321a, 322a, 322b, 521a, 521c, 522a, 522c, 621a, 621b, 622a, 622b) sont reliées par des parties de liaison (221b, 222b, 321c, 322c, 521b, 522b, 621c, 622c).

15. Bloc-batterie selon la revendication 14, dans lequel les parties de liaison (221b, 222b, 521b, 522b) sont formées en tant que parties verticales ayant une forme de bande, les axes longitudinaux des parties de liaison (221b, 222b, 521b, 522b) étant perpendiculaires aux parties parallèles (221a, 221c, 222a, 222c, 521a, 521c, 522a, 522c) ou dans lequel les parties de liaison (321c, 322c, 621c, 622c) sont formées en tant que parties incurvées.
